Europäisches Patentamt

European Patent Office

Office européen des brevets

(19)

(11) Veröffentlichungsnummer: **0 119 520**
**B1**

(12) **EUROPÄISCHE PATENTSCHRIFT**

(45) Veröffentlichungstag der Patentschrift: **25.04.90**

(21) Anmeldenummer: **84102117.3**

(22) Anmeldetag: **29.02.84**

(51) Int. Cl.⁵: **F 16 L 33/22,** F 16 L 33/26, F 16 L 33/01

(54) Anschlussvorrichtung für einen Schlauch.

(30) Priorität: **19.03.83 DE 3309937**

(43) Veröffentlichungstag der Anmeldung:
**26.09.84 Patentblatt 84/39**

(45) Bekanntmachung des Hinweises auf die Patenterteilung:
**25.04.90 Patentblatt 90/17**

(84) Benannte Vertragsstaaten:
**AT BE CH DE FR GB IT LI LU NL SE**

(56) Entgegenhaltungen:
**EP-A-0 060 513**
**DE-A-2 757 901**
**DE-A-3 110 494**
**GB-A-2 099 095**

(73) Patentinhaber: **Hans Grohe GmbH & Co KG**
**Postfach 45**
**D-7622 Schiltach (DE)**

(72) Erfinder: **Finkbeiner, Werner**
**Gerbergasse 10**
**D-7622 Schiltach (DE)**
Erfinder: **Stahl, Eugen Helmut**
**Königheimer Strasse 12**
**D-7205 Böttingen (DE)**

(74) Vertreter: **Patentanwälte Ruff und Beier**
**Neckarstrasse 50**
**D-7000 Stuttgart 1 (DE)**

## Beschreibung

Die Erfindung betrifft eine Anschlußvorrichtung für einen Schlauch mit einer äußeren, einen Flansch aufweisenden unter Vorspannung aufgebrachten Metallhülse und einer mindestens im Bereich des Schlauchendes einstückig doppelwandigen Einsatzhülse, zwischen deren Wände das Schlauchende eingreift und an der es mindestens teilweise befestigt ist.

Es ist bereits eine Anschlußvorrichtung für einen Metallschlauch bekannt (DE-U- 77 39 515), bei der ein Metallschlauch mit einem elastomerischen Innenschlauch versehen ist. Die Anschlußvorrichtung besitzt eine einstückige Einsatzhülse, die im Bereich des Endes U-förmig ausgebildet ist, wobei der äußere Schenkel des Uwesentlich kürzer ist als der innere Schenkel. An der dadurch gebildeten Innenwand der Hülse legt sich der Innenschlauch an, wobei mit einer Spanneinrichtung der Innenschlauch gegen die Innenwand der Hülse angepreßt werden kann. Zu diesem Zweck besitzt die Innenwand der Einsatzhülse an ihrer Außenseite kantenartige Vorsprünge, an denen eine besonders starke Verquetschung des Innenschlauches erfolgt.

Ebenfalls bekannt ist ein Anschlußteil aus Kunststoff für doppelwandige Schläuche (DE-PS 31 10 494), bei der eine Außenhülse und eine einstückig angeformte Innenhülse vorhanden sind. Die Innenhülse besteht aus gummielastischem Kunststoff und reicht weit in das Innere des Schlauchendes hinein.

Der Erfindung liegt die Aufgabe zugrunde, eine einfach herzustellende und dauerhaft haltbare Anschlußvorrichtung zu schaffen, die insbesondere auch bei doppelwandigen Schläuchen eine einwandfreie Abdichtung auch des Zwischenraums zwischen den beiden Schläuchen gewährleistet.

Zur Lösung dieser Aufgabe ist erfindungsgemäß vorgesehen, daß bei einer Anschlußvorrichtung der eingangs genannten Art das Schlauchende mit der Einsatzhülse und der Metallhülse vollflächig verklebt ist. Im Gegensatz zu der bekannten Anschlußvorrichtung ist das Schlauchende also überall mit der Einsatzhülse verbunden, d.h. nicht nur an bestimmten Stellen. Darüber hinaus ist das Schlauchende auch mit der Außenwand der Einsatzhülse verbunden, was bei der bekannten Vorrichtung nicht der Fall ist. Die Verklebung ist eine besonders günstige Möglichkeit bei der Befestigung des Schlauchendes. Dabei kann beispielsweise der Kleber in den Zwischenraum zwischen den beiden Wänden der Einsatzhülse eingebracht und der Schlauch anschließend in diesen Zwischenraum hineingeschoben werden, wodurch sich der Kleber verteilt und die gewünschte Verbindung herstellt.

Dabei kann, wie die Erfindung weiterhin vorschlägt, bei einem doppelwandigen Schlauch der Klebstoff mindestens teilweise in den Zwischenraum zwischen den Innen- und den Außenschlauch eingreifen.

Bei einem doppelwandigen Schlauch ist mit Vorteil der Innenschlauch mit der Innenwand und der Außenschlauch mit der Außenwand verbunden, während der Zwischenraum mindestens teilweise mit Kleber ausgefüllt ist.

In Weiterbildung kann vorgesehen sein, daß das Schlauchende mit der Einsatzhülse verschweißt ist. Hierzu eignet sich insbesondere eine Ultraschall-Schweißung. Aufgrund der großflächigen Verbindung des Schlauches sowohl mit der Außenwand der Einsatzhülse als auch mit der Innenwand der Einsatzhülse wird eine außerordentlich zuverlässige Abdichtung bei gleichzeitiger großer mechanischer Widerstandsfähigkeit ermöglicht.

Der Innenschlauch besteht vorzugsweise aus einem Elastomer, insbesondere aus Gummi oder aus einem Thermoplast.

Die Erfindung schlägt nach einem weiteren Merkmal vor, daß das Schlauchende in den Zwischenraum zwischen den Wänden der Einsatzhülse gestaucht und geklebt ist. Diese Stauchung führt zu einer Verdichtung des Materials im Zwischenraum, so daß ein gutes Anliegen an den Flächen und damit eine gute Verbindung ermöglicht wird. Diese durch das Stauchen hergestellte Verbindung kann u.U. ausreichend sein, die Aufgabe nach der Erfindung zu lösen. Das Stauchen wird vorzugsweise bei Innenschläuchen aus Gummi verwendet.

Die Erfindung schlägt vor, daß das Schlauchende vor dem Stauchen mit einer das Schlauchmaterial erweichenden und es anschließend aushärtenden Lösung behandelt ist. Aufgrund des Weichwerdens läßt sich das Schlauchmaterial besonders leicht stauchen, und im gestauchten Zustand härtet es anschließend aus, so daß die Verbindung mit der Einsatzhülse ebenfalls auf einfache Weise hergestellt ist.

In Weiterbildung schlägt die Erfindung vor, daß die Stirnseite des Zwischenraumes zwischen Außen- und Innenwand der Einsatzhülse etwa radial verlaufende Stege aufweist. Zwischen den Stegen bilden sich Hohlräume, in denen vor der Durchführung der Verbindung Kleber eingebracht werden kann, der dann von dort aus beim Einschieben des Schlauches verteilt wird. Diese Art der Ausbildung der Einsatzhülse sorgt dafür, daß an der Stirnseite des Zwischenraums ausreichend Kleber vorhanden ist und nach dem Einschieben des Schlauches vorhanden bleibt, so daß der Zwischenraum zwischen dem Außen und dem Innenschlauch vollständig abgeschlossen ist.

Um ein besonders gutes Haften des Schlauches an der Einsatzhülse zu ermöglichen, kann in Weiterbildung vorgesehen sein, daß die Außenseite der Innenwand und/oder die Innenseite der Außenwand der Einsatzhülse Verrippungen oder eine verrauhte Oberfläche aufweist. Diese Verrippungen oder die Rauhigkeit dienen nicht dazu, ein Anliegen des Schlauches nur an bestimmten Punkten zu ermöglichen, sondern dazu, die Oberfläche, an der das Schlauchende flächig anliegt, zu vergrößern und dadurch eine verbesserte Haftung durch Formschluß zu ermöglichen.

In Weiterbildung dann vorgesehen sein, daß in die Innenöffnung der Einsatzhülse eine Spreizhülse eingesetzt ist. Diese Spreizhülse, die beispielsweise mit Vorteil aus Metall bestehen kann,
dient einerseits zur mechanischen Stabilisierung
der Anschlußvorrichtung, zum anderen kann sie
einen Druck auf die Innenwand der Einsatzhülse
ausüben, so daß ein Anpressen für die Klebung
erreicht wird.

Die äußere Metallhülse kann nach einem weiteren Merkmal der Erfindung auf die Einsatzhülse
bzw. den Schlauch aufgedrückt sein. Sie kann
damit ebenfalls zur mechanischen Stabilisierung
und zur Vergrößerung der Verbindungskraft
zwischen dem Schlauch und der Einsatzhülse
dienen.

Bei der bekannten Anschlußvorrichtung ist die
äußere Metallhülse verschiebbar, so daß sie zur
Festigung nichts beitragen kann.

Die Erfindung schlägt weiterhin vor, daß die
Außenwand der Einsatzhülse etwa gleich lang
sein kann wie deren Innenwand. Dadurch wird
emöglicht, daß sowohl an der Außenseite des
Schlauches als auch an der Innenseite des
Schlauches eine etwa gleich große Fläche zur
Verbindung zur Verfügung steht.

Die Einsatzhülse kann aus Metall bestehen,
vorzugsweise besteht sie jedoch aus Kunststoff.
Kunststoff läßt sich leichter verkleben bzw. mit
Ultraschall verschweißen.

In Weiterbildung schlägt die Erfindung vor,
daß dort, wo die Außenwand der Einsatzhülse
kürzer ist als die Innenwand, das Schlauchende
in diesem Bereich vollflächig an der äußeren
Metallhülse anliegt, bzw. mit dieser verbunden
ist.

Die äußere Metallhülse kann mit Vorteil etwa
zylindrisch mit mindestens einer Stufe ausgebildet sein. Diese eine Stufe kann eine Halterung für
den Schlauch darstellen, sie kann ebenfalls dazu
dienen, wie von der Erfindung weiterhin vorgeschlagen wird, daß das Schlauchende im Bereich
seiner Stauchung einen Abschnitt mit größerem
Querschnitt als im weiteren Bereich aufweist.
Dieser Teil mit größerem Querschnitt bewirkt
beim Ausüben von axialen Kräften eine Art Verkeilung des Schlauchendes, so daß dies auch
unter diesen Umständen absolut sicher gehalten
wird.

Nach einem weiteren Merkmal kann vorgesehen sein, daß die Stirnfläche der Einsatzhülse mit
dem Flansch der äußeren Metallhülse in einer
senkrecht zur Längsachse der Anschlußvorrichtung verlaufenden Ebene liegen. In diesem Fall
liegt eine zwischengelegte Ringdichtung gleichmäßig auf der Einsatzhülse und dem äußeren
Flansch auf, so daß die Kräfte gleichmäßig verteilt werden.

Weitere Merkmale, Einzelheiten und Vorzüge
der Erfindung ergeben sich aus der folgenden
Beschreibung bevorzugter Ausführungsformen
der Erfindung sowie anhand der Zeichnung. Hierbei zeigen:

Fig. 1 einen Längsschnitt durch eine erste Ausführungsform mit dargestellter Überwurfmutter;

Fig. 2 einen Längsschnitt durch eine zweite

Anschlußvorrichung nach der Erfindung ohne
Überwurfmutter und

Fig. 3 eine Ansicht der in Fig. 2 dargestellten
Einsatzhülse in Richtung des Pfeiles III in Fig. 2.

Fig. 4 eine weitere Ausführungsform.

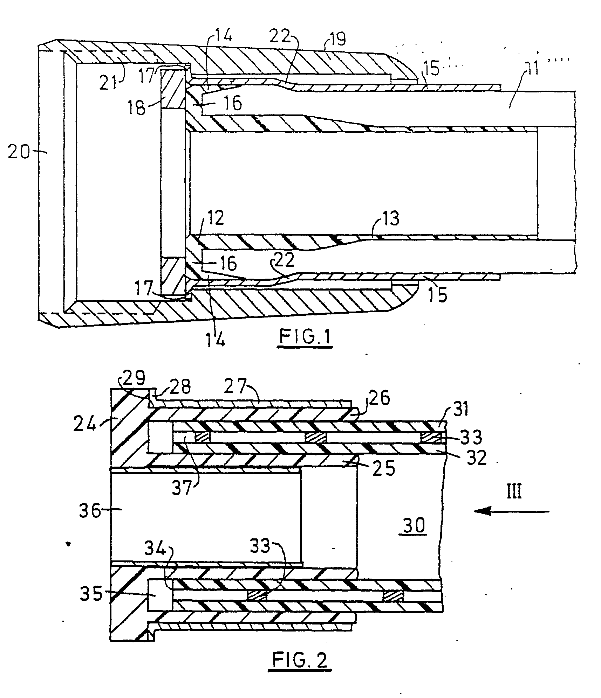

Bei der in Fig. 1 dargestellten Anschlußvorrichtung für einen Schlauch 11, der sowohl einwandig als auch zweiwandig sein kann, liegt dieser
mit seiner gesamten Innenfläche auf der Außenseite der Innenwandung 13 einer Einsatzhülse 12
an. Die Einsatzhülse 12 ist im Bereich des
schlauchseitigen Endes der Anschlußvorrichtung
etwa U-förmig ausgebildet, wobei der zweite
Schenkel die Außenwand 14 bildet. Die Einsatzhülse 12 sitzt innerhalb einer äußeren
Metallhülse 15, wobei der Steg 16 zwischen der
Innenwand 13 und der Außenwand 14 der Einsatzhülse 12 in einer gemeinsamen senkrecht zur
Längsachse der Vorrichtung stehenden Ebene
mit einem Flansch 17 liegt, der sich von der
Metallhülse 15 nach außen erstreckt.

Auf dem Steg 16 und dem Flansch 17 liegt eine
Ringdichtung 18 auf. Über die äußere
Metallhülse 15 ist eine Überwurfmutter 19
aufgeschoben, die an ihrer dem Schlauchende
entsprechenden Seite 20 ein Innengewinde 21
aufweist, mit dessen Hilfe die Anschlußvorrichtung an einem entsprechenden Gewindeteil
angeschraubt werden kann. Die Abdichtung
gegenüber diesem Teil erfolgt durch die Ringdichtung 18, während die Abdichtung zwischen
Innenraum des Schlauches und der Außenseite
durch die vollflächige Anlage des Schlauches 11
an der Innen- und Außenwand der Einsatzhülse
12 gewährleistet ist.

Die in Fig. 1 dargestellte Ausführungsform
wird folgendermaßen hergestellt. Über den
Schlauch 11 wird die Überwurfmutter 19 und die
Metallhülse 15 aufgeschoben, so daß der
Schlauch 11 um ein bestimmtes Maß von etwa 5-
10 mm über den Flansch 17 hinausragt.
Anschließend wird das Schlauchende in eine
Lösung getaucht, die derart eingestellt ist, daß
sie in den Schlauch eindringt und diesen vorübergehend erweicht. Nach dem Erweichen wird
die Einsatzhülse 12 von links auf das
Schlauchende aufgesteckt und nach innen verschoben, wobei eine starke Stauchung des
Schlauchendes in diesem Bereich stattfindet.
Sobald die Einsatzhülse 12 die in der Fig. 1
dargestellte Stellung erreicht hat, läßt man den
Schlauch aushärten. Es entsteht dadurch eine
bleibende starke Verklemmung des Schlauchendes 11 zwischen der Innenwand 13 der Einsatzhülse 12 und der Außenwand 14 der Hülse 12
und der Innenseite der äußeren Metallhülse 15.

Die Metallhülse 15 besitzt etwa zylindrische
Form, wobei sie im Bereich kurz hinter dem Ende
der Außenwand 14 der Einsatzhülse 12 eine
flache Abknickung 22 nach innen aufweist. An
diese Abknickung oder Stufe 22 verringert sich
der Querschnitt des Schlauchendes 11, so daß
hierdurch eine Verkeilung des Schlauchendes in
der Einsatzhülse 12 und der äußeren Metallhülse
15 herbeigeführt wird, was ebenfalls zu einer starken Belastbarkeit der Vorrichtung in axialer Richtung führt.

Die Innenwand 13 ist im Bereich des vorderen Endes, in Fig. 1 links, dicker ausgebildet, als im übrigen Bereich. Dies führt zusammen mit der Keilform der Außenwand 14 zu einem Engerwerden des Querschnitts zur Vorderseite hin, was insbesondere bei Verwendung doppelwandiger Schläuche von Vorteil sein kann, da in diesem Bereich der Außenschlauch und der Innenschlauch zusammengedrückt werden.

Fig. 2 zeigt eine abgeänderte Ausführungsform, bei der die Einsatzhülse 24 zwei etwa gleich lange Wände aufweist, nämlich die Innenwand 25 und die Außenwand 26. Außerhalb der Außenwand 26 ist wieder die äußere Metallhülse 27 aufgedrückt, die in diesem Fall ebenfalls zylindrisch, aber ohne Stufe verläuft und in einen Flansch 28 übergeht, der an einer Schulter 29 der Einsatzhülse 24 anliegt. In diesem Fall würde die Einsatzhülse 24 ggf. selbst die Aufgabe der Ringdichtung 18 der Vorrichtung nach Fig. 1 übernehmen können.

Zwischen die Außenwand 26 und die Innenwand 25 der Einsatzhülse 24 ist ein doppelwandiger Schlauch 30 eingeklebt, der aus einem Außenschlauch 31 und einem Innenschlauch 32 aus einem Thermoplast besteht.

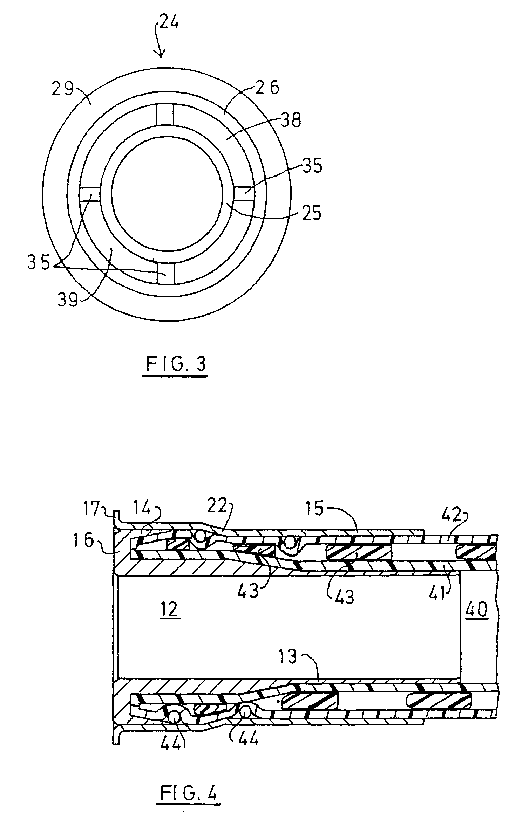

Zwischen den Außenschlauch 31 und den Innenschlauch 32 ist eine längs einer Schraubenlinie verlaufende Einlage 33 eingesetzt, die die beiden Schläuche voneinander trennt. Bei dieser in Fig. 2 dargestellten Ausführungsform ist die Außenseite des Außenschlauches 31 mit der Innenseite der Außenwand 26 verklebt, während die Innenseite des Innenschlauches 32 mit der Außenseite der Innenwand 25 der Einsatzhülse 24 verklebt ist. Wie ebenfalls aus Fig. 2 zu sehen ist, stößt das vordere Ende 34 des Schlauches 30 an radial verlaufende Stege 35 an, deren Lage aus Fig. 3 im einzelnen noch hervorgeht.

Während die äußere Metallhülse 27 von außen her auf die Einsatzhülse mit dem eingesetzten Schlauch 30 aufgedrückt ist, ist in das Innere der Einsatzhülse 24 eine Spreizhülse 36 eingesetzt, die ebenfalls zur mechanischen Verstärkung der Vorrichtung dient. Gleichzeitig dient sie dazu, die Innenwand 25 der Einsatzhülse 24 etwas nach außen zu spreizen bzw. zu drücken so daß ein guter Kontakt zwischen der Innenwand 25 und dem Innenschlauch 32 hergestellt wird, der zu einer guten Verklebung führt.

Bei geeigneten Materialien ist mit Vorteil möglich, eine Verschweißung von Einsatzhülse und Schlauch, vorzugsweise mit Hilfe von Ultraschall, vorzunehmen.

Bei einer Verklebung wird in den Zwischenraum zwischen den Stegen 35 vor dem Einsetzen des Schlauches 30 ausreichend Kleber eingebracht, der dann beim Einschieben des Schlauches 30 in den Zwischenraum 37 zwischen dem Außenschlauch 31 und dem Innenschlauch 32 eindringen kann und damit zu einer weiteren Befestigung und Abdichtung des Schlauches an der Einsatzhülse 24 beitragen kann.

Bei beiden in den Figuren 1 und 2 dargestellten Ausführungsformen liegt also eine vollflächige Anlage des Schlauches an der Einsatzhülse bzw. an der äußeren Metallhülse vor, so daß eine Abdichtung über eine große Fläche gegeben ist, was zu einer einwandfreien Abdichtung auch gegenüber dem Zwischenraum zwischen Außen- und Innenschlauch führt.

Fig. 3 zeigt nun eine Ansicht der Einsatzhülse ohne Schlauch in Richtung des Pfeiles III in Fig. 2. Zu sehen sind die Schulter 29 der Einsatzhülse 24 sowie die Außenwand 26 und die Innenwand 25. Die Stirnfläche 38 des Zwischenraumes zwischen der Außen- und der Innenwand weist insgesamt vier radial verlaufende Stege 35 auf, auf die bereits in Fig. 2 hingewiesen wurde. In den Raum 39 zwischen den Stegen 35 wird vor dem Einbringen des Schlauches 30 ausreichend Kleber gegeben, so daß dieser beim Einschieben des Schlauches 30 herausquillt und zu einer guten Verklebung des Außen- und des Innenschlauches führt. Ebenfalls ist ein Eindringen in den Zwischenraum 37 zwischen Außen- und Innenschlauch gegeben, wobei der Kleber u.U. längs der Einlage 33 vordringen kann.

Bei der Ausführungsform nach Fig. 4 findet die gleiche Einsatzhülse Anwendung wie bei der Ausführungsform nach Fig. 1. Identische Teile sind mit identischen Bezugszeichen versehen. Anstelle des einwandigen Schlauches 11 in Fig. 1 enthält die Anschlußvorrichtung nach Fig. 4 einen doppelwandigen Schlauch 40, der zwischen einem Innenschlauch 41 und einem Außenschlauch 42 eine längs einer Schraubenlinie gewickelte flache Verstärkungswendel 43 aufweist. Um das in die Einsatzhülse 12 einzusetzende Schlauchende, und zwar um den Außenschlauch 42 sind zwei Windungen eines aus Polypropylen bestehenden Drahtes 24 herumgewickelt, wobei der Draht 44 auf Lücke zwischen je zwei Windungen der Verstärkungswendel 43 gewickelt ist. Dadurch wird der Außenschlauch 42 in den Zwischenraum zwischen je zwei Windungen der Verstärkungswendel hineingedrückt, so daß die Hohlräume ausgefüllt werden und die Pressung des Gummis verstärkt wird. Es wird ebenfalls verhindert, daß Gummi in die Hohlräume kriecht. Damit wird eine verstärkte Haftung des Schlauchendes in der Einsatzhülse 12 erreicht.

**Patentansprüche**

1. Anschlußvorrichtung für einen Schlauch (11, 30) mit einer äußeren, einen Flansch (17, 28) aufweisenden unter Vorspannung aufgebrachten Metallhülse (15, 27) und einer mindestens im Bereich des Schlauchendes einstückig doppelwandigen Einsatzhülse (12, 24), zwischen deren Wände (13, 14; 25, 26) das Schlauchende eingreift und an der es mindestens teilweise befestigt ist, dadurch gekennzeichnet, daß das Schlauchende (11) mit der Einsatzhülse (12, 24) und der Metallhülse (15, 27) vollflächig verklebt ist.

2. Vorrichtung nach dem Oberbegriff des Anspruches 1, dadurch gekennzeichnet, daß das Schlauchende (11) mit der Einsatzhülse (12, 24) vollflächig verklebt oder verschweißt, insbesondere ultraschallverschweißt ist.

3. Vorrichtung nach Anspruch 2, dadurch gekennzeichnet, daß bei Verwendung eines doppelwandigen Schlauchs (30) der Innenschlauch (32) mit der Innenwand (25) und der Außenschlauch (31) mit der Außenwand (26) der Einsatzhülse (24) verbunden und der Zwischenraum (37) zwischen Innenschlauch (32) und Außenschlauch (31) mindestens teilweise von Kleber ausgefüllt ist.

4. Vorrichtung nach einem der vorhergehenden Ansprüche, dadurch gekennzeichnet, daß bei einem doppelwandigen Schlauch (30) der Innenschlauch (32) aus einem Elastomer oder einem Thermoplast besteht.

5. Vorrichtung nach einem der vorhergehenden Ansprüche, dadurch gekennzeichnet, daß das Schlauchende (11) in den Zwischenraum zwischen den Wänden (13, 14) der Einsatzhülse (12) gestaucht und geklebt ist, wobei es vorzugsweise vor dem Stauchen mit einer das Schlauchmaterial erweichenden und es anschließend aushärtenden Lösung bzw. einem solchen Kleber behandelt ist.

6. Vorrichtung nach einem der vorhergehenden Anspruch dadurch gekennzeichnet, daß die Stirnfläche (38) des Zwischenraums (39) zwischen Außenwand (14, 26) und Innenwand (13, 25) der Einsatzhülse (12, 24) etwa radial verlaufende Stege (35) und/oder die Außenseite der Innenwand (13, 25) und/oder die Innenseite der Außenwand (14, 26) der Einsatzhülse (12, 24) Verrippungen oder eine verrauhte Oberfläche aufweisen.

7. Vorrichtung nach einem der vorhergehenden Anspruch, dadurch gekennzeichnet, daß in die Innenöffnung der Einsatzhülse (12, 24) eine Spreizhülse (36) eingesetzt ist.

8. Vorrichtung nach einem der vorhergehenden Anspruch, dadurch gekennzeichnet, daß die Außenwand (26) der Einsatzhülse (24) etwa gleich lang ist wie ihre Innenwand (25).

g. Vorrichtung nach einem der vorhergehenden Ansprüche, dadurch gekennzeichnet, daß die Einsatzhülse (12, 24) aus Kunststoff und/oder aus Metall besteht.

10. Vorrichtung nach einem der vorhergehenden Anspruch, dadurch gekennzeichnet, daß die äußere Metallhülse (15, 27) etwa zylindrisch, ggf. mit mindestens einer Stufe (22) ausgebildet ist und ggf. das Schlauchende (11) im Bereich seiner Stauchung einen Abschnitt mit größerem Querschnitt als näher zum Schlauchende hin aufweist.

11. Vorrichtung nach einem der vorhergehenden Anspruch, dadurch gekennzeichnet, daß die Stirnfläche der Einsatzhülse (12) und der Flansch (17) der äußeren Metallhülse (15) in einer gemeinsamen Ebene liegen.

12. Vorrichtung nach einem der vorhergehenden Anspruch, dadurch gekennzeichnet, daß bei einem doppelwandigen Schlauch (40) mit einer zwischen dem Außenschlauch (42) und dem Innenschlauch (41) angeordneten Verstärkungswendel (43) im Bereich des Schlauchendes um den Außenschlauch (42) eine vorzugsweise aus Polypropylen bestehende Drahtwendel (44) auf Lücke gewickelt ist, vorzugsweise unter Vorspannung.

**Revendications**

1. Dispositif destiné à raccorder un tuyau flexible (11, 30). ce dispositif comprenant un manchon métallique (15, 27) externe mis en état de précontrainte et présentant une bride (17, 28), ainsi qu'un manchon rapporté (12, 24) à double paroi constitué d'une seule pièce, au moins dans la zone de l'extrémité du tuyau flexible, l'extrémité du tuyau flexible venant s'engrener entre les parois (13, 14; 25, 26) du manchon rapporté et étant fixée au moins en partie à ce dernier, caractérisé en ce que l'extrémité du tuyau flexible (11) est collée sur toute sa surface au manchon rapporté (12, 24) et au manchon métallique (15, 27).

2. Dispositif selon le préambule de la revendication 1, caractérisé en ce que l'extrémité du tuyau (11) est collée ou soudée, en particulier, soudée par ultrasons, sur toute sa surface au manchon rapporté (12, 24).

3. Dispositif selon la revendication 2, caractérisé en ce que lors de·l'utilisation d'un tuyau flexible (30) à double paroi, le tuyau flexible interne (32) est relié à la paroi interne (25), tandis que le tuyau flexible externe (31) est relié à la paroi externe (26) du manchon rapporté (24), l'espace intermédiaire (37) ménagé entre le tuyau flexible interne (32) et le tuyau flexible externe (31) étant rempli au moins en partie de colle.

4. Dispositif selon l'une quelconque des revendications précédentes, caractérisé en ce que, dans le cas d'un tuyau flexible (30) à double paroi, le tuyau flexible interne (32) est constitué d'un élastomère ou d'une matière thermoplastique.

5. Dispositif selon l'une quelconque des revendications précédentes caractérisé en ce que l'extrémité du tuyau flexible (11) est refoulée et collée dans l'espace intermédiaire ménagé entre les parois (13, 14) du manchon rapporté (12), l'extrémité du tuyau flexible étant, de préférence, traitée avant le refoulement avec une solution ou une colle destinée à ramollir la matière dont est constitué le tuyau flexible et de la durcir ensuite.

6. Dispositif selon l'une quelconque des revendications précédentes, caractérisé en ce que la face frontale (38) de l'espace intermédiaire (39) ménagé entre la paroi externe (14, 26) et la paroi interne (13, 25) du manchon rapporté (12, 24) présente des traverses (35) s'étendant en direction approximativement radiale, et/ou le côté externe de la paroi interne (13, 25) et/ou le côté interne de la paroi externe (14, 26) du manchon rapporté (12, 24) présente(nt) des nervures ou une surface rendue rugueuse.

7. Dispositif selon l'une quelconque des revendications précédentes caractérisé en ce qu'un manchon écarteur (36) est inséré dans l'ouverture interne du manchon rapporté (12, 24).

8. Dispositif selon l'une quelconque des revendications précédentes caractérisé en ce que la paroi externe (26) du manchon rapporté (24) est approximativement de même longueur que sa paroi interne (25).

9. Dispositif selon l'une quelconque des revendications précédentes caractérisé en ce que le manchon rapporté (12, 24) est constitué de matière synthétique et/ou de métal.

10. Dispositif selon l'une quelconque des revendications précédentes caractérisé en ce que le manchon métallique externe (15, 27) est réalisé en forme approximativement cylindrique, tandis qu'il est éventuellement muni d'au moins un gradin (22), et l'extrémité du tuyau flexible (11) présente éventuellement dans la zone de son refoulement une section de coupe transversale plus grande que celle de la zone se trouvant plus proche de l'extrémité du tuyau flexible.

11. Dispositif selon l'une quelconque des revendications précédentes caractérisé en ce que la face frontale du manchon rapporté (12) et la bride (17) du manchon métallique externe (15) se trouvent dans un plan commun.

12. Dispositif selon l'une quelconque des revendications précédentes caractérisé en ce que, dans le cas d'un tuyau flexible (40) à double paroi muni d'un boudin de renforcement (43) disposé entre le tuyau flexible externe (42) et le tuyau flexible interne (41) dans la zone de l'extrémité du tuyau flexible, autour du tuyau flexible externe (42), on enroule en chicane un boudin en fil (44) constitué, de préférence, de polypropylène, le boudin se trouvant, de préférence, en état de précontrainte.

**Claims**

1. Connecting device for a hose (11, 30) with an outer metal sleeve (15, 27) having a flange (17, 28) and a one-piece, double-walled insert sleeve (12, 24), at least in the vicinity of the hose end, between whose walls (13, 14, 25, 26) the hose end engages and to which it is at least partially fixed, characterized in that the hose end (11) is bonded in full surface manner to the insert sleeve (12, 24) and the metal sleeve (15, 27).

2. Device according to the preamble of claim 1, characterized in that the hose end (11) is bonded or welded, particularly ultrasonically welded in full surface manner to the insert sleeve (12, 24).

3. Device according to claim 2, characterized in that when using a double-walled hose (30), the inner hose (32) is connected to the inner wall (25) and the outer hose (31) to the outer wall (26) of the insert sleeve (24) and the gap (37) between the inner hose (32) and the outer hose (31) is at least partly filled with adhesive.

4. Device according to one of the preceding claims, characterized in that in the case of a double-walled hose (30), the inner hose (32) is made from an elastomer or a thermoplastic material.

5. Device according to one of the preceding claims, characterized in that the hose end (11) is compressed and bonded in the gap between the walls (13, 14) of insert sleeve (12) and preferably, prior to compression, it is treated with a solution or adhesive softening the hose material and subsequently hardening it.

6. Device according to one of the preceding claims, characterized in that the end face (38) of the gap (39) between the outer wall (14, 26) and the inner wall (13, 25) of the insert sleeve (12, 24) has roughly radially directed webs (35) and/or the outside of the inner wall (13, 25) and/or the inside of the outer wall (14, 26) of insert sleeve (12, 24) has ribs or a roughened surface.

7. Device according to one of the preceding claims, characterized in that an expanding sleeve (36) is inserted in the inner opening of the insert sleeve (12, 24).

8. Device according to one of the preceding claims, characterized in that the outer wall (26) of insert sleeve (24) is roughly of the same length as the inner wall (25).

9. Device according to one of the preceding claims, characterized in that the insert sleeve (12, 24) is made from plastic and/or metal.

10. Device according to one of the preceding claims, characterized in that the outer metal sleeve (15, 27) is approximately cylindrical and is optionally constructed with at least one step (22) and optionally the hose end (11) in the vicinity of its compression has a portion with a larger cross-section than closer to the hose end.

11. Device according to one of the preceding claims, characterized in that the end face of the insert sleeve (12) and the flange (17) of the outer metal sleeve (15) are located in a common plane.

12. Device according to one of the preceding claims, characterized in that in the case of a double-walled hose (40) with a reinforcing coil (43) between the outer hose (42) and the inner hose (41), a preferably polypropylene wire coil (44) is wound in staggered manner and preferably under a pretension around the outer hose (42) in the vicinity of the hose end.

FIG.1

FIG. 2

EP 0 119 520 B1

FIG. 3

FIG. 4

2